Europäisches Patentamt

European Patent Office

Office européen des brevets

(19)

(11) EP 0 987 563 B1

(12) **EUROPÄISCHE PATENTSCHRIFT**

(45) Veröffentlichungstag und Bekanntmachung des Hinweises auf die Patenterteilung:
**05.11.2003 Patentblatt 2003/45**

(51) Int Cl.⁷: **G01S 15/93**, G01S 13/89, G01S 13/42, B60Q 1/48

(21) Anmeldenummer: **99116522.6**

(22) Anmeldetag: **24.08.1999**

(54) **Verfahren zur Bestimmung des Abstandes zwischen einem Objekt und einer sich örtlich verändernden Einrichtung, insbesondere einem Kraftfahrzeug**

Method for determining the distance separating an object and a movable installation, in particular a motorised vehicle

Méthode pour déterminer la distance de séparation d'un objet et un engin déplaçable, en particulier un véhicule motorisé

(84) Benannte Vertragsstaaten:
**DE FR GB**

(30) Priorität: **15.09.1998 DE 19842250**

(43) Veröffentlichungstag der Anmeldung:
**22.03.2000 Patentblatt 2000/12**

(73) Patentinhaber: **Siemens Aktiengesellschaft 80333 München (DE)**

(72) Erfinder:
• **Hassler, Gregor 65520 Bad Camberg (DE)**
• **Fleischhauer, Norbert 65760 Eschborn (DE)**

(56) Entgegenhaltungen:
**DE-A- 3 244 358**      **DE-A- 4 023 538**
**DE-A- 19 711 467**

EP 0 987 563 B1

**Beschreibung**

Die Erfindung betrifft ein Verfahren zur Bestimmung des Abstandes zwischen einem Objekt und einer sich örtlich verändernden Einrichtung, insbesondere einem Kraftfahrzeug, bei welchem ein an dieser Einrichtung angeordneter erster oder zweiter Sensor ein Signal abgibt, welches von dem Objekt reflektiert wird und das reflektierte Signal von dem das Signal aussendenden Sensor und dem jeweils anderen Sensor empfangen wird und eine Auswerteeinrichtung die Laufzeiten zwischen dem Aussenden des Signals und dem Empfangen des Signals für jeden Sensor bestimmt und daraus alle möglichen Positionen des Objektes zur örtlich veränderlichen Einrichtung bezogen auf den Sensor ermittelt, wobei aus den übereinstimmenden Positionen der Messungen der Abstand zum Kraftfahrzeug bestimmt wird.

Um das Rückwärtsfahren zu erleichtern, und Zusammenstöße mit parkenden Wagen oder anderen im Weg stehenden Gegenständen zu verhindern, ist es bekannt, an der Rückseite des Kraftfahrzeuges Sensoren vorzusehen, welche beispielsweise Ultraschall- oder Radarsignale aussenden und die von dem Hindernis reflektierte Strahlung wieder empfangen. Dabei wird der Abstand zwischen dem am Kraftfahrzeug angeordneten Sensor und dem Hindernis aus der Laufzeit des Signals vom Sensor zum Hindernis und wieder zurück bestimmt.

Ein gattungsgemäßes Verfahren ist aus der DE 40 23 538 A1 bekannt, bei welchem eine berührungslose Abstandsmessung zwischen einem Hindernis und einem Kraftfahrzeug durchgeführt wird. Dabei sind zwei Ultraschallsensoren in einem vorgegebenen Abstand angeordnet und eine Einrichtung zur Auswertung der Laufzeiten zwischen dem Aussenden jeweils eines Ultraschallsignales und dem Empfang eines reflektierten Ultraschallsignales des jeweils gleichen und anderen Ultraschallsensors vorgesehen. Der Abstand wird dabei durch das Triangulationsprinzip ermittelt.

Aus der noch unveröffentlichten 197 11 467.9 werden die durch die direkte Messung (der das Signal aussendende Sensor empfängt das reflektierte Signal) und die durch eine indirekte Messung ( ein zweiter Sensor empfängt das reflektierte Signal) gewonnenen Meßdaten verglichen und für die Position, welche durch beide Meßverfahren ermittelt wurde, der Abstand berechnet.

Dieses Verfahren hat den Nachteil, daß aufgrund unterschiedlicher, verwendeter Meßverfahren auch unterschiedlich genaue Ergebnisse erzielt werden, da bei jedem Meßvorgang Meßdaten erzeugt werden, die nicht ausgewertet werden können.

Der Erfindung liegt somit die Aufgabe zugrunde, ein Verfahren zur Bestimmung des senkrechten Abstandes des Objektes von einem Kraftfahrzeug anzugeben, welches bei minimaler Auswertezeit ein genaues Ergebnis der Abstandsmessung ermöglicht.

Erfindungsgemäß wird die Aufgabe dadurch gelöst, daß die Auswerteeinrichtung aus den Meßdaten in einem ersten, sehr genauen Auswerteverfahren übereinstimmende Positionen ermittelt und anschließend aus den verbliebenen unverifizierten Meßdaten in einem zweiten, weniger genauem Auswerteverfahren weitere übereinstimmende Positionen bestimmt werden.

Der Vorteil der Erfindung besteht darin, daß durch die in einem einzigen Meßvorgang generierten Meßdaten infolge einer Mehrfachauswertung sehr genaue Meßergebnisse erzielt werden. Auf eine umständliche Mehrfachmessung, um die Genauigkeit nur eines Meßverfahrens zu erhöhen, wird dabei verzichtet

In einer Ausgestaltung ermittelt die Auswerteeinrichtung aus den Meßdaten in einem ersten Auswerteschritt die durch mindestens drei Laufzeitmessungen bestimmten Positionen des Objektes, wobei für die Position des Objektes, die durch alle drei Laufzeitmessungen erfaßt wurden, der Abstand bestimmt wird. Anschließend wird in einem zweiten Auswerteschritt aus allen, im ersten Auswerteschritt unberücksichtigten Meßdaten die durch mindestens zwei Laufzeitmessungen bestimmten Positionen des Objektes bestimmt und aus der durch beide Laufzeitmessungen erfaßten Position der Abstand bestimmt, wobei in einem dritten Auswerteschritt, aus den im zweiten Auswerteschritt unberücksichtigten Meßdaten der Abstand aus einer durch eine einfache Laufzeitmessung ermittelte Position bestimmt wird.

Aufgrund dieses Verfahrens ist nicht nur eine einfache und genauere, sondern auch eine schnellere Auswertung der gewonnen Meßdaten möglich. Ein solches Auswerteverfahren ist insbesondere für den Nahbereich des Kraftfahrzeuges günstig, da hier in diesem Bereich durch Überdeckungslücken der Sensorkeulen weniger Informationen vorliegen. Die gewählte Abfolge der verschiedenen Auswertverfahren führt zu einer Filterung der Meßdaten, so daß sicher jeder Meßwert nur einmal ausgewertet wird.

Vorteilhafterweise überwacht die Auswerteeinrichtung die in den drei Auswerteschritten bestimmten übereinstimmenden Positionen hinsichtlich der Häufigkeit ihres Auftretens und nur für die Positionen, derer Häufigkeit einen vorgegebenen Grenzwert übersteigt, wird der Abstand zwischen Objekt und Kraftfahrzeug bestimmt. Diesem Verfahrensschritt liegt die Erkenntnis zugrunde, daß auch unterschiedliche Auswerteschritte zu dem gleichen Ergebnis kommen können, wobei die Auswerteeinrichtung registriert, daß eine Position mehrfach belegt ist. Diese Mehrfachbelegung ist somit eine Aussage für die Zuverlässigkeit der Auswertung. Außerdem werden Zufallsmeßdaten, die nur einmal auftreten und aufgrund von Streuungen in der Umgebung des Kraftfahrzeuges erfaßt wurden, herausgefiltert.

Aus den übereinstimmenden Positionen, die mehrfach erfaßt wurden, wird der Abstand senkrecht zur Fahrzeugkontur bestimmt.

Um Umwelteinflüsse auszusondern, wird der Abstand zwischen Objekt und der sich örtlich verändernden Einrichtung nur dann bestimmt, wenn sich das Objekt in einem Sensorkorridor befindet, welcher zwischen dem ersten und dem zweiten Sensor aufgespannt ist.

In einer Weiterbildung wird bei Anwesenheit von mehreren Sensoren der Sensorkorridor zwischen den die aktuellen Messungen ausführenden Sensoren aufgespannt. Somit wird sichergestellt, daß die direkte und indirekte Messung immer durch zwei Sensoren durchgeführt wird.

Da die Sensoren unterschiedliche Entfernungen voneinander aufweisen, werden bei der paarweisen Messung der Sensoren unterschiedlich breite Sensorkorridore aufgespannt. Es können somit unterschiedlich große Objekte bzw. Hindernisse geortet werden.

Bei der Erfassung von mehreren Objekten mit unterschiedlichen Abständen zu der sich örtlich ändernden Einrichtung wird das Objekt mit dem minimalen Abstand bestimmt und der minimale senkrechte Abstand berechnet und abgespeichert.

Die Erfindung läßt zahlreiche Ausführungen zu. Eine davon soll anhand der in der Zeichnung dargestellten Figuren näher erläutert werden.

Dabei zeigen

Fig. 1    Anordnung zur Bestimmung des Abstandes zwischen einem Hindernis und einem Kraftfahrzeug,

Fig. 2    Verfahren zur Arbeitsweise der Anordnung gemäß Figur 1,

Fig. 3    direkte und indirekte Messung bei zwei Sensoren,

Fig. 4    Sensorkorridore

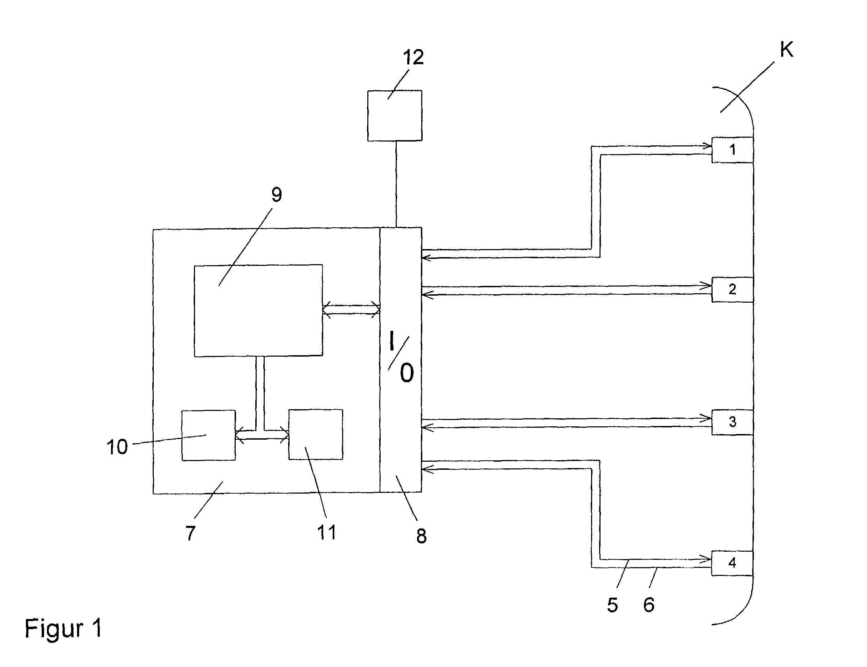

Gemäß Figur 1 sind an der rückseitigen Stoßstange eines Kraftfahrzeuges K vier Ultraschallgeber 1, 2, 3, 4 in gleichmäßigen Abständen angeordnet, die als Rückfahr- und Einparkhilfe genutzt werden.

Die verwendeten piezoelektrischen Ultraschallgeber 1, 2, 3, 4 dienen sowohl als Sender als auch als Empfänger. Eine Steuereinheit 7, welche vorzugsweise ein Mikroprozessor ist, ist über Sende- 5 und Empfangsleitungen 6 mit jedem der Ultraschallgeber 1, 2, 3, 4 verbunden. Der Mikroprozessor weist dabei eine Ein- und Ausgabeeinheit 8, eine zentrale Recheneinheit 9 sowie einen Arbeitsspeicher 10 und einen Festwertspeicher 11 auf.

Der Mikroprozessor 7 erzeugt elektrische Impulse mit einer Frequenz von ungefähr 40 KHz, die über die Leitung 5 an den jeweiligen Ultraschallgeber 1, 2, 3, 4 weitergeleitet und dort in entsprechende Ultraschallimpulse umgewandelt werden. Die vom Objekt A reflektierten Ultraschallsignale (Echos) werden von den Ultraschallempfängern 1, 2, 3 bzw. 4 empfangen und als elektrisches Signal über die Leitung 6 an die Steuereinheit 7 geleitet. Die Steuereinheit 7 mißt mit Hilfe ihres internen, nicht weiter dargestellten Taktgebers, die Laufzeit zwischen der Aussendung des elektrischen Impulses und dem Empfang des elektrischen Impulses und speichert diese im Arbeitsspeicher 11 ab.

Üblicherweise wird aus der Laufzeit t des Ultraschallsignals der Abstand s zwischen dem Kraftfahrzeug (Sensor) und dem Hindernis A nach der bekannten Gleichung

$$s = \frac{1}{2} \times v \times t$$

bestimmt, wobei v die Schallgeschwindigkeit darstellt.

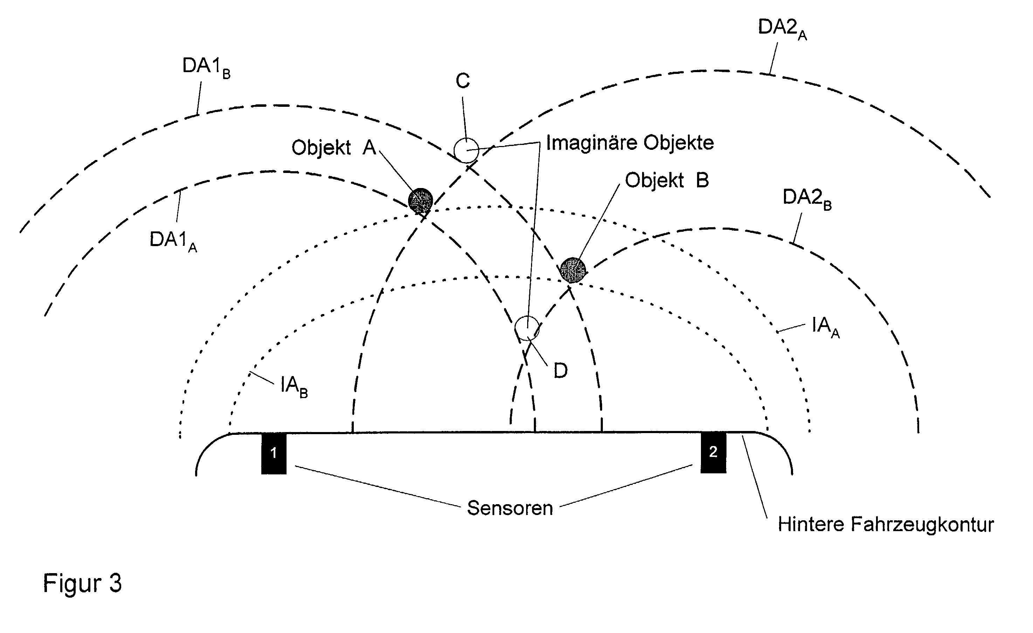

Bei dieser direkten Messung ist nur eine Aussage über den Abstand zwischen Sensor und Objekt möglich. Eine Angabe des senkrechten Abstandes zwischen Objekt A und dem Kraftfahrzeug K, an dem sich der Sensor befindet, scheitert an der Mehrdeutigkeit, hervorgerufen durch die möglichen Positionen des Objektes. Denn es existieren beliebig viele Objekt-Positionen mit dem gleichen Sensor-Objektabstand. Man kann diesen Sensor-Objektabstand auch als Radius eines Kreises betrachten und den Kreis als die Kurve auf dem sich ein, aber auch beliebig viele Objekte befinden können. Dieser Halbkreis soll deshalb als Anwesenheitskurve DA 1 $_A$ und DA 1 $_B$ bzw. DA 2 $_A$ und DA 2 $_B$ (vgl. Figur 3) bezeichnet werden.

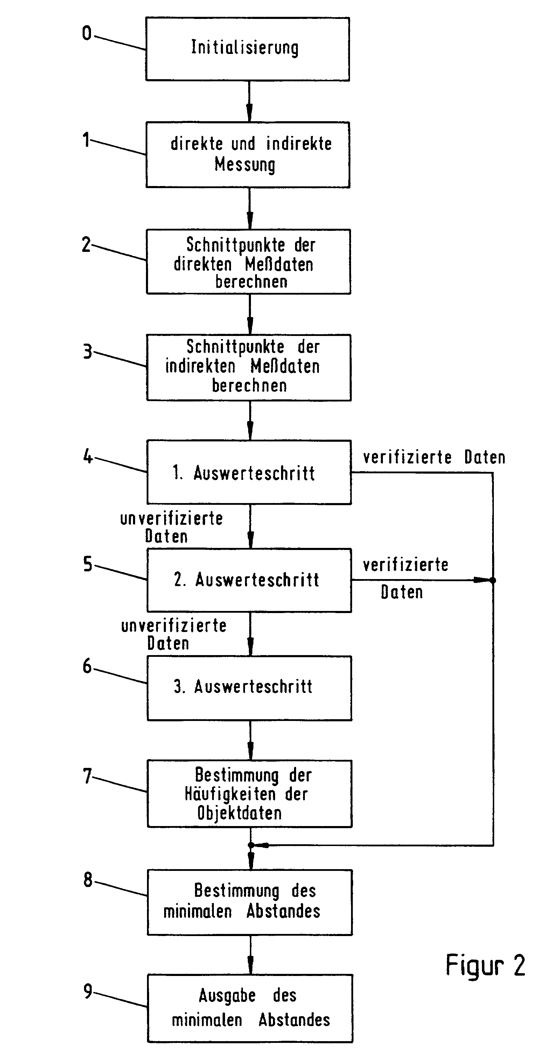

Das erfindungsgemäße Verfahren soll nun anhand der Figuren 2 und 3 für zwei Sensoren erläutert werden.

Vor Beginn der eigentlichen Messung muß jeder Ultraschallsensor mindestens ein Signal gesendet haben. Dies erfolgt in einer Initialisierungsphase 0.

In der eigentlichen Meßphase 1 werden die Sensoren 1, 2, 3, 4 für direkte und indirekte Messungen zyklisch von der Steuereinheit 7 angesteuert und abgetastet. Das heißt, Sensor 1 gibt ein Ultraschallsignal ab, was einmal vom Objekt A und außerdem vom Objekt B reflektiert wird. Die Echos werden vom Sensor 1 empfangen. Aufgrund der unterschiedlichen Laufzeiten der Signale - vom Sensor 1 zum Objekt A bzw. vom Sensor 1 zum Objekt B und wieder zurück - berechnet die Steuereinheit 7 für jedes Objekt A und B einen Abstand zum Sensor 1, der im Speicher 10 abgespeichert wird. Alle mit diesem Abstand möglichen Positionen des Objektes A sind durch die Anwesenheitskurve DA 1 $_A$ gekennzeichnet. Für das Objekt B ergeben sich alle möglichen Positionen zum Sensor 1 entsprechend der Anwesenheitskurve DA 1 $_B$.

Die Aussendung und der Empfang des Signals von ein und demselben Sensor soll im weiteren als direkte Messung bezeichnet werden.

Dieselbe direkte Messung erfolgt mit dem Sensor 2, wobei der Sensor 2 sowohl das Signal aussendet als auch die reflektierten Signale empfängt. Aus dieser Messung ergeben sich für das Objekt A Positionen zum Sensor 2, welche auf der direkten Anwesenheitskurve DA 2 $_A$ liegen. Die Positionen des Objektes B liegen auf der Umhüllungskurve DA 2 $_B$. Diese Kurven sind im Speicher 11 des Steuergerätes 7 abgespeichert.

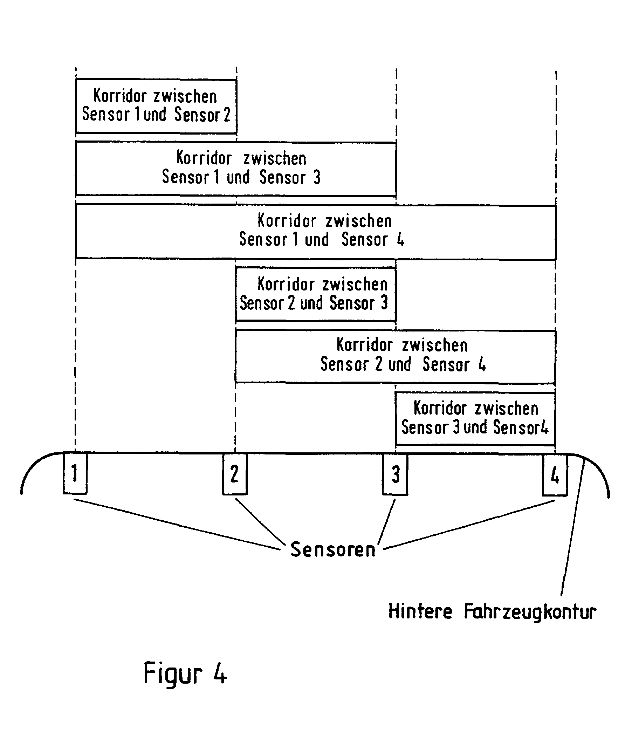

Gleichzeitig mit der direkten Messung erfolgen immer indirekte Messungen. Bei der indirekten Messung sendet ein Sensor, während ein zweiter Sensor das Ultraschallsignal nach der Reflektion durch ein Objekt empfängt. Diese Messung ist also keine Abstandsmessung, sondern es wird die Strecke, die das Ultraschallsignal vom Sensor 1 zum Objekt und weiter zu Sensor 2 zurücklegt, ermittelt (Figur 4). Die Laufstrecke ergibt sich aus der Gleichung

$$s = v \times t$$

wobei v auch hier die Schallgeschwindigkeit mit 343 m/s bei 20° C darstellt.

Für den Sensor 2, der bei Aussendung des Signals vom Sensor 1 nur das reflektierte Signal empfängt, ergeben sich aufgrund der indirekten Messung die Anwesenheitskurven $IA_A$ und $IA_B$, die im folgenden erläutert werden sollen.

Werden alle möglichen, der ermittelten Laufzeit entsprechenden Positionen aufgetragen, ergibt sich eine elliptische Anwesenheitskurve, wie sie in Figur 3 als $IA_A$ und $IA_B$ dargestellt ist.

Nach Schritt 2 der Figur 2 werden die durch die direkte Messung der Sensoren 1 und 2 ermittelten Anwesenheitskurven DA 1 $_A$ und DA 2 $_A$ bzw. DA 1 $_B$ und DA 2 $_B$ verglichen, um gemeinsame Positionen der Objekte festzustellen. Dies erfolgt durch Bestimmung der Schnittpunkte der Anwesenheitskurven. Wie aus Figur 3 ersichtlich, ergeben sich aber neben den realen Objekten A und B, dabei auch noch imaginäre Objekte D und C. Im Schritt 3 werden diese Schnittpunkte durch die Kurven $IA_A$ und $IA_B$, die durch die indirekte Messung des Sensors 2 bzw. 1 gewonnen werden, verifiziert. Nur die Schnittpunkte der direkten Messungen, an denen sich auch reale Objekte befinden, werden von der Anwesenheitskurve $IA_A$ bzw. $IA_B$ der indirekten Messung durchlaufen.

Die erfaßten Objekte werden in einem zweidimensionalen Koordinatensystem abgespeichert, bei welchen die x-Achse parallel zur hinteren Fahrzeugkontur verläuft und die y-Achse senkrecht dazu den Abstand des Objektes bis zum Fahrzeug charakterisiert.

Alle während eines Meßvorganges gemessenen Daten werden in einem ersten Auswerteschritt 4 ausgewertet, welches das genaueste Meßverfahren darstellt,.

Bei diesem Meßverfahren handelt es sich um eine Auswertung von drei Laufzeiten, die entweder durch zwei direkte Messungen und eine indirekte Messung oder aber äquivalent dazu aus zwei indirekten Messungen und einer direkten Messung besteht. Alle die Meßdaten, die mit Hilfe dieser Auswertemethode zu einem Ergebnis führen, werden ausgesondert.

Alle die Meßdaten, die in diesem ersten Ausweteschritt nicht zugeordnet werden konnten, werden einem zweiten Auswerteschritt 5 zugeführt. Bei diesem Auswerteschritt werden die Positionen, welche sich aus zwei Laufzeitmessungen ergeben, miteinander verglichen, auch hier gibt es drei zueinander gleichbedeutende Auswertemöglichkeiten. Dabei können die Positionen aus den zwei direkten Messungen der beiden Sensoren verglichen werden oder die Positionen, die in einem direkten Meßverfahren und in einem indirekten Meßverfahren erzeugt wurden oder aber als dritte Variante können auch die Positionen verglichen werden, die bei zwei indirekten Messungen bestimmt wurden. Auch in diesem Verfahrensschritt werden die Meßdaten herausgefiltert, die zu einem zuverlässigen Ergebnis führen.

An den Auswerteschritt 5 schließt sich ein dritter Auswerteschritt 6 an, dem die Meßdaten unterzogen wurden, die weder im ersten noch im zweiten Verfahensschritt zu einem plausiblen Ergebnis geführt haben.

Im dritten Verfahrensschritt werden die Meßdaten herausgesucht, die mit einer einfachen Laufzeitmessung infolge einer direkten Messung oder indirekten Messung die Position des Objektes bestimmen.

In allen drei Auswerteschritten 4, 5, 6 werden Objektdaten bestimmt. Dabei ist es möglich, daß bei unterschiedlichen Auswerteschritten die gleichen Objektdaten ermittelt werden. Die Auswerteeinrichtung zählt die Häufigkeit der auftretenden gleichen Objektdaten und ermittelt aus den Objektdaten, die einen bestimmten Grenzwert überschreiten, die Abstände des Objektes zu der Außenkontur des Kraftfahrzeuges.

Im Schritt 8 wird aus allen als real erfaßten Objekten das Objekt mit dem kleinsten Abstand festgelegt und der Abstand berechnet. Der minimale Abstand wird durch gleitende Mittelwertbildung gefiltert und im Schritt 9 an die Anzeigeeinrichtung 12 in Figur 1 ausgegeben. Diese Anzeigevorrichtung ist üblicherweise ein Lautsprecher, der bei Annäherung des Kraftfahrzeuges an ein Hindernis einen Hupton abgibt.

Zur Erhöhung der Sicherheit der Meßergebnisse kann zusätzlich noch festgestellt werden, ob sich das so festgestellte Objekt A bzw. B auch in einem Sensorkorridor zwischen den an der Schnittpunktbildung beteiligten Sensoren befindet. Dieser Sensorkorridor erstreckt sich senkrecht in der vollen Breite des Abstandes der Sensoren in Richtung Hindernis. (Figur 4)

Bei den in Figur 4 dargestellten verwendeten vier Sensoren 1, 2, 3, 4 wird das Meßverfahren immer so durchgeführt, daß die beschriebene direkte und indirekte Messung immer paarweise erfolgt. Da die direkte Messung jedes Sensors mit den aller anderen Sensoren geschnitten werden, ergeben sich sechs mögliche Kombinationen von Sensoren und somit sechs mögliche Korridore, die sich in der Breite unterscheiden können.

Aufgrund dieser Auswertemethode wird eine hochgenaue und sichere Bestimmung des Hindernisses möglich.

**Patentansprüche**

1. Verfahren zur Bestimmung des Abstandes zwischen einem Objekt und einer sich örtlich verändernden Einrichtung, insbesondere einem Kraftfahrzeug, bei welchem ein an dieser Einrichtung angeordneter erster oder zweiter Sensor ein Signal abgibt, welches von dem Objekt reflektiert wird, wobei das reflektierte Signal von dem das Signal aussendenden und dem jeweils anderen Sensor empfangen wird und eine Auswerteeinrichtung die Laufzeiten zwischen dem Aussenden des Signales und dem Empfangen des Signales für jeden Sensor bestimmt und daraus alle möglichen Positionen des Objektes zur örtlich veränderlichen Einrichtung für jeden Sensor ermittelt, wobei aus übereinstimmenden Positionen der senkrechte Abstand zu der sich örtlich verändernden Einrichtung bestimmt wird, **dadurch gekennzeichnet, daß** die Auswerteeinrichtung aus den Meßdaten in einem ersten, sehr genauen Auswerteverfahren übereinstimmende Positionen ermittelt und anschließend aus den verbliebenen unverifizierten Meßdaten in einem zweiten, weniger genauem Auswerteverfahren weitere übereinstimmende Positionen bestimmt.

2. Verfahren nach Anspruch 1 **dadurch gekennzeichnet, daß** aus den Meßdaten in einem ersten Auswerteschritt die durch mindestens drei Laufzeitmessungen bestimmten Positionen des Objektes ermittelt werden und für die Position des Objektes, die durch alle drei Laufzeitmessungen übereinstimmend erfaßt wurden, der Abstand bestimmt wird, anschließend in einem zweiten Auswerteschritt aus allen, im ersten Auswerteschritt unberücksichtigten Meßdaten die durch mindestens zwei Laufzeitmessungen ermittelten Positionen des Objektes verglichen werden und aus den durch beide Laufzeitmessungen übereinstimmend erfaßten Position der Abstand bestimmt wird, wobei anschließend in einem dritten Auswerteschritt, aus dem im zweiten Auswerteschritt unberücksichtigten Meßdaten der Abstand aus einer durch eine einfache Laufzeitmessung ermittelten Position bestimmt wird.

3. Verfahren nach Anspruch 2, **dadurch gekennzeichnet, daß** die Auswerteeinrichtung die in den drei Auswerteschritten bestimmten Positionen hinsichtlich der Häufigkeit des Auftretens überwacht und nur für die Position den Abstand bestimmt, deren Häufigkeit einen vorgegebenen Grenzwert übersteigt.

4. Verfahren nach einem der Ansprüche 2 oder 3, **dadurch gekennzeichnet, daß** der Abstand zwischen dem Objekt und der sich örtlich verändernden Einrichtung nur dann bestimmt wird, wenn sich das Objekt in einem Sensorkorridor befindet, welcher zwischen dem ersten und dem zweiten Sensor aufgespannt ist.

5. Verfahren nach Anspruch 4, **dadurch gekennzeichnet, daß** bei Anwesenheit mehrerer Sensoren an der sich örtlich verändernden Einrichtung der Sensorkorridor zwischen den die aktuellen Messungen ausführenden Sensoren aufgespannt wird.

6. Verfahren nach Anspruch 5, **dadurch gekennzeichnet, daß** bei der Erfassung von mehreren Objekten mit unterschiedlichen Abständen zu der sich örtlich ändernden Einrichtung das Objekt mit dem minimalen Abstand erfaßt wird.

**Claims**

1. Method for determining the distance between an object and a device of varying location, in particular a motor vehicle, in which a first or second sensor arranged on this device emits a signal which is reflected by the object, in which case the reflected signal is received by the sensor transmitting the signal and by the respective other sensor, and an evaluation device determines the propagation times between the transmission of the signal and the reception of the signal for each sensor and determines therefrom all the possible positions of the objects relative to the device of varying location for each sensor, the perpendicular distance from the device of varying location being determined from corresponding positions, **characterized in that** the evaluation device determines corresponding positions from the measured data in the first, very accurate evaluation method and subsequently determines further corresponding positions on the remaining unverified measured data in the second, less accurate evaluation method.

2. Method according to Claim 1, **characterized in that**, in the first evaluation step, the positions of the object determined by at least three propagation time measurements are determined from the measured data, and the distance is determined for the position of the object which have been measured correspondingly by all three propagation time measurements and subsequently, in a second evaluation step, the positions of the object determined by at least two propagation time measurements are compared from all the measured data ignored in the first evaluation step and the distance is determined from the position measured correspondingly by the two propagation time measurements, the distance subsequently being determined, from a position determined by a single propagation time measurement in a third evaluation step from the measured data ignored in the second evaluation step.

3. Method according to Claim 2, **characterized in that** the evaluation device monitors the positions determined in the three evaluation steps with regard to the frequency of occurrence, and determines the distance only for the position whose frequency exceeds a prescribed limit value.

4. Method according to one of Claims 2 or 3, **characterized in that** the distance between the object and the device of varying location is determined only when the object is located in a sensor corridor which is defined between the first and the second sensor.

5. Method according to Claim 4, **characterized in that** in the case of the presence of a plurality of sensors on the device of varying location, the sensor corridor is defined between the sensors executing the current measurements.

6. Method according to Claim 5, **characterized in that** the object with the minimum distance is measured in the case of measurement of a plurality of objects with different distances from the device of varying location.

**Revendications**

1. Procédé pour déterminer la distance entre un objet et un dispositif mobile, en particulier un véhicule à moteur, procédé dans lequel un premier ou un deuxième détecteur adapté sur ce dispositif envoie un signal qui est réfléchi par l'objet, le signal réfléchi étant capté par le détecteur ayant envoyé le signal et par l'autre détecteur, et un dispositif d'évaluation détermine les temps de parcours entre l'envoi et la réception du signal pour chaque détecteur et calcule pour chaque détecteur toutes les positions possibles de l'objet par rapport au dispositif mobile, la distance orthogonale au dispositif mobile étant déterminée à partir des positions coïncidentes, **caractérisé en ce que** le dispositif d'évaluation détermine au cours d'un premier procédé d'évaluation très précis des positions coïncidentes à partir des données de mesure, et détermine ensuite, au cours d'un deuxième procédé d'évaluation moins précis, des positions coïncidentes supplémentaires à partir des données de mesure restantes non vérifiées.

2. Procédé selon la revendication 1, **caractérisé en ce que** les positions de l'objet, définies par trois mesures de temps de parcours, sont déterminées à partir des données de mesure dans une première étape d'évaluation et que la distance est déterminée pour les positions de l'objet qui ont été trouvées coïncidentes par toutes les trois mesures de temps de parcours, et ensuite, dans une deuxième étape d'évaluation, les positions de l'objet sont comparées qui ont été déterminées par au moins deux mesures de temps de parcours, à partir de toutes les données de mesure dont il n'avait pas été tenu compte dans la première étape d'évaluation, et la distance est déterminée à partir des positions coïncidentes selon les deux mesures de temps de parcours, une troisième étape d'évaluation déterminant la distance à partir d'une position établie par une simple mesure de temps de parcours en utilisant les données de mesure dont il n'avait pas été tenu compte dans la deuxième étape d'évaluation.

3. Procédé selon la revendication 2, **caractérisé en ce que** le dispositif d'évaluation surveille les positions déterminées au cours des trois étapes d'évaluation pour la fréquence de leur apparition et ne calcule la distance que pour les positions dont la fréquence d'apparition dépasse une limite prédéterminée.

4. Procédé selon la revendication 2 ou 3, **caractérisé en ce que** la distance entre l'objet et le dispositif changeant son emplacement n'est déterminée que lorsque l'objet se trouve dans un couloir de détection déployé entre le premier et le deuxième détecteur.

5. Procédé selon la revendication 4, **caractérisé en ce que** le couloir de détection est déployé, en cas de présence de plusieurs détecteurs sur le dispositif changeant son emplacement, entre les détecteurs qui exécutent actuellement les mesures.

6. Procédé selon la revendication 5, **caractérisé en ce que** l'objet ayant la plus petite distance est détecté lorsque plusieurs objets ayant des distances différentes au dispositif changeant son emplacement sont scrutés.

Figur 1

**Figur 2**

0 — Initialisierung

1 — direkte und indirekte Messung

2 — Schnittpunkte der direkten Meßdaten berechnen

3 — Schnittpunkte der indirekten Meßdaten berechnen

4 — 1. Auswerteschritt

verifizierte Daten

unverifizierte Daten

5 — 2. Auswerteschritt

verifizierte Daten

unverifizierte Daten

6 — 3. Auswerteschritt

7 — Bestimmung der Häufigkeiten der Objektdaten

8 — Bestimmung des minimalen Abstandes

9 — Ausgabe des minimalen Abstandes

Figur 3

EP 0 987 563 B1

Korridor zwischen
Sensor 1 und Sensor 2

Korridor zwischen
Sensor 1 und Sensor 3

Korridor zwischen
Sensor 1 und Sensor 4

Korridor zwischen
Sensor 2 und Sensor 3

Korridor zwischen
Sensor 2 und Sensor 4

Korridor zwischen
Sensor 3 und Sensor 4

1   2   3   4

Sensoren

Hintere Fahrzeugkontur

Figur 4